# EUROPEAN PATENT APPLICATION

(11) **EP 4 672 131 A1**
(43) Date of publication of application: **31.12.2025**
(21) Application number: 24904220.1
(22) Date of filing: 10.12.2024
(51) Int. Cl.: G06T 5/00, G06T 7/00, G06T 7/11, H04N 23/73

(54) **IMAGE BRIGHTNESS CORRECTION METHOD AND ELECTRODE INSPECTION APPARATUS USING SAME**

(30) Priority: 14.12.2023 KR 20230181389
(71) Applicant: LG Energy Solution, Ltd., Seoul 07335 (KR)
(72) Inventor: CHA, Yeongeun, Daejeon 34122 (KR); KIM, Shikwon, Daejeon 34122 (KR)
(74) Representative: Goddar, Heinz J.
(86) International application number: PCT/KR2024/020117
(87) International publication number: WO 2025/127655

(57) **Abstract**

An image brightness correction method according to an embodiment of the present invention may comprise the steps of: acquiring a plurality of images by capturing the appearance of a target object at different brightness; extracting, within the image, one or more inspection target areas; comparing the brightness of the one or more inspection target areas with a brightness threshold set in each inspection target area; and calculating, according to the result of the comparison, a brightness correction value by reflecting target brightness in the brightness of the inspection target areas.

## Description

### [Technical Field]

This application claims priority to and the benefit of Korean Patent Application No.10-2023-0181389 filed in the Korean Intellectual Property Office on December 14, 2023 the entire contents of which are incorporated herein by reference.

The present invention relates to a method for correcting image brightness and an electrode inspection apparatus using the method, and more particularly, to a method for correcting brightness of electrode images during a battery electrode manufacturing process and an electrode inspection apparatus using the method.

### [Background Art]

Secondary batteries, capable of recharging and reuse, may be used as an energy source for small devices such as mobile phones, tablet PCs and vacuum cleaners, and also used as an energy source for medium and large devices such as personal mobility, automobiles and an energy storage system (ESS) for smart grids. Secondary batteries may be used in the form of an assembly such as a battery module in which a plurality of battery cells is connected in series and parallel or a battery pack in which battery modules are connected in series and parallel according to system requirements.

Batteries may be manufactured through processes including an electrode preparation process, an assembly processes, and an activation/inspection process, and defect inspection may be performed on manufactured battery cells or results of each process using inspection equipment. inspection using images may be one of widely used techniques among defect inspection methods. Image inspection may be performed by obtaining images of parts and semi-finished products during a manufacturing process using an optical system and detecting defects using a detection algorithm.

In relation to this, during an electrode slitting process performed in the electrode preparation process, the slitting width and the presence or absence of defects on the electrode surface are important factors that affect the quality of the product, and quality inspection using images may be performed. Here, the brightness of the image in the image inspection may be directly related to inspection quality.

However, brightness of the inspection image of the electrode may fluctuate to the extent that normal inspection is impossible due to changes in raw materials or process conditions. In this case, all related manufacturing facilities must be stopped and the operator should adjust the brightness of the inspection image to within a standard range suitable for inspection by adjusting lighting intensity or camera exposure value. Accordingly, not only may production rates decrease and production costs increase due to equipment downtime, but problems such as over-inspection and defect leakage due to manual work may also occur.

### [Detailed Description of the Invention]

### [Technical Problem]

To obviate one or more problems of the related art, embodiments of the present disclosure provide a method for correcting brightness of electrode images during an electrode preparation process.

To obviate one or more problems of the related art, embodiments of the present disclosure also provide an electrode inspection apparatus using the image brightness correction method.

### [Technical Solution]

In order to achieve the objective of the present disclosure, a method for correcting image brightness may include acquiring a plurality of images of appearance of a target object captured at different brightness levels; extracting one or more inspection target areas within each image; comparing brightnesses of the one or more inspection target areas with a brightness threshold which is determined for each inspection target area; and calculating a brightness correction value by reflecting a target brightness to the brightness of each inspection target area based on the comparison result.

The brightness of each inspection target area may be determined to an average brightness of pixels within the inspection target area.

The comparing the brightnesses of the one or more inspection target areas with the brightness threshold which is determined for each inspection target area may include comparing the average brightness of the inspection target area with a brightness lower limit value and a brightness upper limit value determined for the corresponding inspection target area.

The calculating a brightness correction value by reflecting a target brightness to the brightness of each inspection target area based on the comparison result may include calculating the brightness correction value based on a difference value between the average brightness and the target brightness when the average brightness of the inspection target area is outside a range from the brightness lower limit value to the brightness upper limit value.

The calculating the brightness correction value based on the difference value between the average brightness and the target brightness may include calculating a camera exposure time adjustment value calculated by multiplying the difference between the average brightness and the target brightness by a control constant.

The calculating the brightness correction value based on the difference value between the average brightness and the target brightness may include, if one image includes a plurality of inspection target areas and brightness correction values calculated for the plurality of inspection target areas are different from each other, calculating a camera exposure time adjustment value by multiplying the largest value among the brightness correction values by a control constant.

The method may further include providing the calculated camera exposure time adjustment value to an imaging device.

The target object may include an electrode in an electrode preparation process of a battery manufacturing process.

The one or more inspection target areas may include one or more of a coated region, an uncoated region, and an insulating area of an electrode that are distinguished according to the properties of the corresponding area.

The plurality of images captured with different brightnesses may include a first image captured with a first brightness and a second image captured with a second brightness, and the second brightness is different from the first brightness.

A defect inspection of the target object in a battery manufacturing process may be performed using the inspection target area of which the brightness is corrected.

According to another embodiment of the present disclosure, an apparatus for inspecting an electrode during an electrode preparation process may include at least one processor; and a memory configured to store at least one instruction executed by the at least one processor, wherein the at least one instruction may include an instruction to receive a plurality of images of the appearance of a target object captured at different brightness levels from an imaging device; an instruction to extract one or more inspection target areas within each image; an instruction to compare brightnesses of the one or more inspection target areas with a brightness threshold which is determined for each inspection target area; and an instruction to calculate a brightness correction value by reflecting a target brightness to the brightness of each inspection target area based on the comparison result.

The brightness of each inspection target area may be determined to an average brightness of pixels within the inspection target area.

The instruction to compare brightnesses of the one or more inspection target areas with a brightness threshold which is determined for each inspection target area may include an instruction to compare the average brightness of the inspection target area with a brightness lower limit value and a brightness upper limit value determined for the corresponding inspection target area.

The instruction to calculate a brightness correction value by reflecting a target brightness to the brightness of each inspection target area based on the comparison result may include an instruction to calculate the brightness correction value based on a difference value between the average brightness and the target brightness when the average brightness of the inspection target area is outside a range from the brightness lower limit value to the brightness upper limit value.

The instruction to calculate the brightness correction value based on a difference value between the average brightness and the target brightness may include an instruction to calculate a camera exposure time adjustment value calculated by multiplying the difference between the average brightness and the target brightness by a control constant.

The instruction to calculate the brightness correction value based on a difference value between the average brightness and the target brightness may include an instruction to, if one image includes a plurality of inspection target areas and brightness correction values calculated for the plurality of inspection target areas are different from each other, calculate a camera exposure time adjustment value by multiplying the largest value among the brightness correction values by a control constant.

The at least one instruction may further include an instruction to provide the calculated camera exposure time adjustment value to the imaging device.

The one or more inspection target areas may include one or more of a coated region, an uncoated region, and an insulating area of an electrode that are distinguished according to the properties of the corresponding area.

The plurality of images captured with different brightnesses may include a first image captured with a first brightness and a second image captured with a second brightness, and the second brightness is different from the first brightness.

Meanwhile, the at least one instruction may further include an instruction to perform defect inspection of the target object during a battery manufacturing process using the inspection target area of which the brightness is corrected.

### [Advantageous Effects]

According to the above-described embodiments of the present invention, the brightness of an inspection image may be automatically corrected in real time in a battery electrode image inspection, thereby obtaining quantification and automation of image quality management.

In addition, the electrode inspection may be performed without stopping manufacturing equipment according to the above-described embodiments of the present invention, and thus, damage due to equipment stoppage may be prevented.

Furthermore, the risk of over-inspection and under-inspection due to human error in the existing manual work can be eliminated.

### [Brief Description of the Drawings]

FIG. 1 is a schematic diagram of a battery manufacturing process to which the present invention may be applied.
FIG. 2 is a conceptual diagram of a slitting process to which the present invention may be applied.
FIG. 3A and FIG. 3B illustrate examples of inspection target areas of an electrode inspection apparatus according to embodiments of the present invention.
FIG. 4 is a schematic flowchart of an image brightness correction method according to embodiments of the present invention.
FIG. 5 is a table showing inspection items in each image according to embodiments of the present invention.
FIG. 6 is a table presenting items to be detected through each image inspection according to embodiments of the present invention.
FIG. 7 shows detection items in each image inspection which are displayed on an actual image according to embodiments of the present invention.
FIG. 8 shows an example of a brightness correction method for an image having low brightness according to embodiments of the present invention.
FIG. 9 is a block diagram of an electrode inspection apparatus according to embodiments of the present invention.

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it may be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

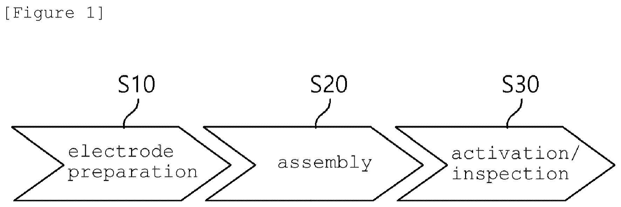

FIG. 1 is a schematic diagram of a battery manufacturing process to which the present invention may be applied.

The battery may be manufactured through an electrode preparation process (S10), an assembly process (S20), and an activation/inspection process (S30). The battery completed through these processes may be shipped in the form of a battery pack (or battery module) including a plurality of battery cells connected in series. The battery pack may be connected to a load through a positive terminal and a negative terminal and may perform charge/discharge operations. Battery packs may be configured to be connected in series/parallel according to requirements of a system to which the battery is applied.

More specifically, the electrode preparation process (S10) may proceed in the following order: a "mixing process' for mixing raw materials, a 'coating process' for applying mixed slurry to a foil and drying it, a 'roll pressing process' for compressing the electrode to reduce the thickness of the electrode, a 'slitting process' for cutting the electrode to a preset width, and a 'notching process' for creating a tab on the electrode.

Here, the slitting process is a process of cutting the electrode according to the size of the battery after the electrode is thinly spread through the roll pressing process, which is a process of cutting the electrode vertically using a slitter according to designed battery specifications. The blade for the slitting process may vary depending on the size of the battery cell to be manufactured.

The assembly process (S20) is a process of assembling the positive and negative plates manufactured through the electrode preparation process together with a separator to make a finished cell. The manufacturing order of the assembly process may differ depending on the battery type (cylindrical, pouch, prismatic), and technologies applied by each manufacturer may also differ.

In addition, the activation/inspection process (S30) is a process of activating electric energy and checking stability. The activation process may be performed by repeating aging and charging/discharging, and in the 'aging' process, the battery is stored at room temperature with a certain temperature and humidity so that the electrolyte permeates the positive and negative electrodes. When the electrolyte is dispersed inside the battery and the ion movement between the positive and negative electrodes becomes smooth, the battery is partially charged to activate the cell. Here, lithium ions move all the way to the negative electrode and the electrolyte is decomposed, forming an ion-conductive thin solid film called 'Solid Electrolyte Interphase (SEI)' on a surface of the negative electrode.

Afterwards, the battery that has undergone the activation process is tested for charge capacity and undergoes a process of sorting out defective batteries before being shipped.

The image brightness correction method according to the present invention may be applied to an electrode preparation process, particularly a slitting process, during a battery manufacturing process.

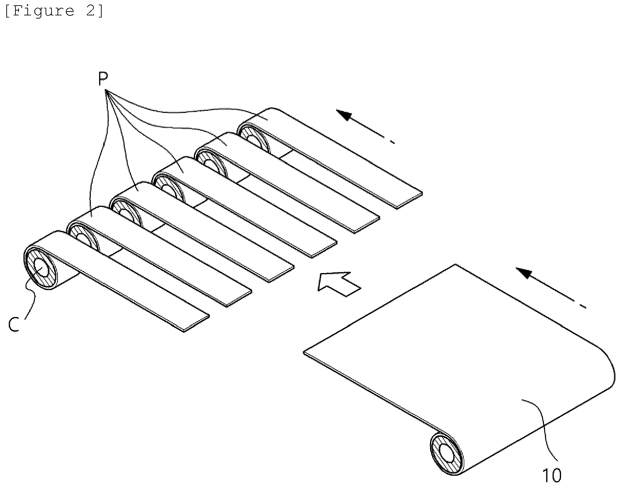

FIG. 2 is a conceptual diagram of a slitting process to which the present invention may be applied.

The slitting process may be performed on a jumbo roll, which is a form in which a thinly spread electrode that is discharged through a roll pressing process is wound. An electrode sheet on which electrode active material is applied and dried is wound in a roll shape on the jumbo roll. Here, it is preferable to understand that the electrode sheet on which the electrode active material is applied and dried is a coated electrode sheet on which a coating process is completed.

The electrode (positive electrode plate or negative electrode plate) to be inspected during a battery slitting process according to embodiments of the present invention is configured to include an active material coated region in which an active material slurry is coated on an aluminum or copper thin film, an uncoated uncoated region, and an insulating area on which an insulating material is attached or coated.

For a slitting process, an electrode sheet wound in a roll shape is unwound by rotation. Referring to FIG. 2, the jumbo roll 10 is unwound by the rotation of the unwinder roller (U), and the unwound electrode is cut by a slitting device equipped for each slitting lane in the returning process to form a plurality of unit electrode sheets. Each of the plurality of unit electrode sheets is wound by a rewinder. The rewinder may include a cylindrical winding core (C) for winding the unit electrode sheets.

As shown in FIG. 2, as the slitting process progresses, a unit electrode roll (P; also known as a pancake) may be produced for each slitting lane. Meanwhile, the slitting process may include not only a first slitting process for cutting the jumbo roll into a plurality of unit electrode sheets, but also a second slitting process for additionally cutting one unit electrode sheet to form a plurality of sub-unit electrode sheets, in which case a sub-unit electrode roll may be formed as a result of the slitting process.

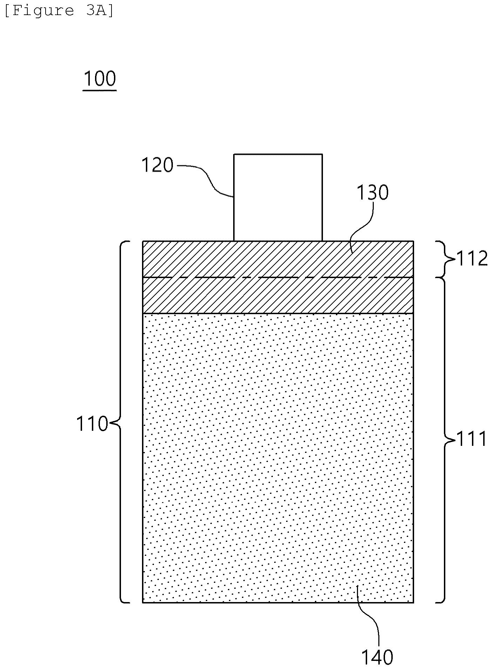

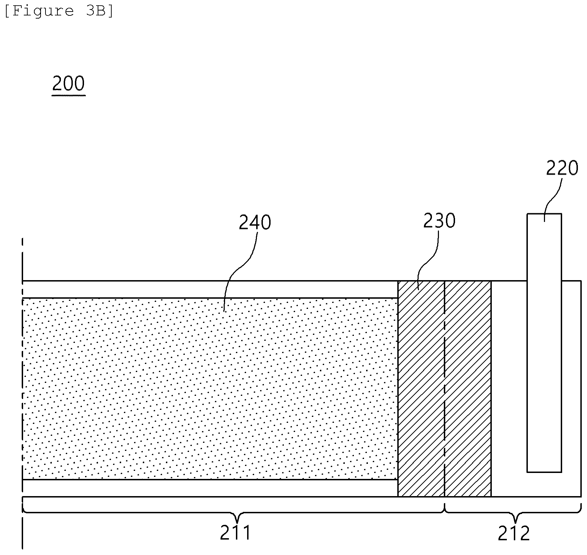

FIG. 3A and FIG. 3B illustrate examples of inspection target areas of an electrode inspection apparatus according to embodiments of the present invention.

The electrode being an inspection target of the electrode inspection apparatus according to embodiments of the present invention may be a positive electrode or a negative electrode. FIG. 3A illustrates an example of a positive electrode for a stacked electrode assembly and FIG. 3B illustrates an example of a positive electrode of a jelly-roll type electrode assembly.

Referring to FIG. 3A, the positive electrode 100 may include a positive electrode current collector 110 and a positive electrode tab 120 protruding from the positive electrode current collector 110. An insulating region 130 may be formed at a boundary between a positive electrode mixture application region (or coated region) 111 on which a positive electrode mixture 140 is applied and a positive electrode uncoated region 112 on which a positive electrode mixture 140 is not applied, on the positive electrode current collector 110. The positive electrode tab 120 on which positive electrode mixture is not applied may also be considered as a part of the positive electrode uncoated region. In the example of FIG. 3A, the insulating region 130 may be formed on the entire positive electrode uncoated region 112, but the insulating region may be formed on only a part of the positive electrode uncoated region of the positive electrode current collector.

In addition, the positive electrode 200 illustrated in FIG. 3B may be a positive electrode for a jelly-roll type electrode assembly. The insulating region 230 may be formed at the boundary between the positive electrode coated region 211 on which the positive electrode mixture 240 is applied and the uncoated region 212 on which the positive electrode mixture 240 is not applied, on the current collector (aluminum foil), and a positive electrode tab 220 may be attached in an upwardly protruding form to the end of the uncoated region 212.

In FIGS. 3A and 3B, the insulating region 130, 230 may prevent a short circuit due to contact between the positive electrode and the negative electrode, thereby improving the safety of the secondary battery.

The inspection target area according to embodiments of the present invention may include one or more areas included in an electrode placed under an electrode preparation process of the battery manufacturing process. More specifically, the inspection target area according to the embodiments of the present invention may include one or more regions among a coated region, an uncoated region, and an insulating region of the electrode, which are classified according to properties of the regions. When images of the coated region, the uncoated region, and the insulating region of the electrode are analyzed, the brightness of each region may appear differently due to the properties of the regions.

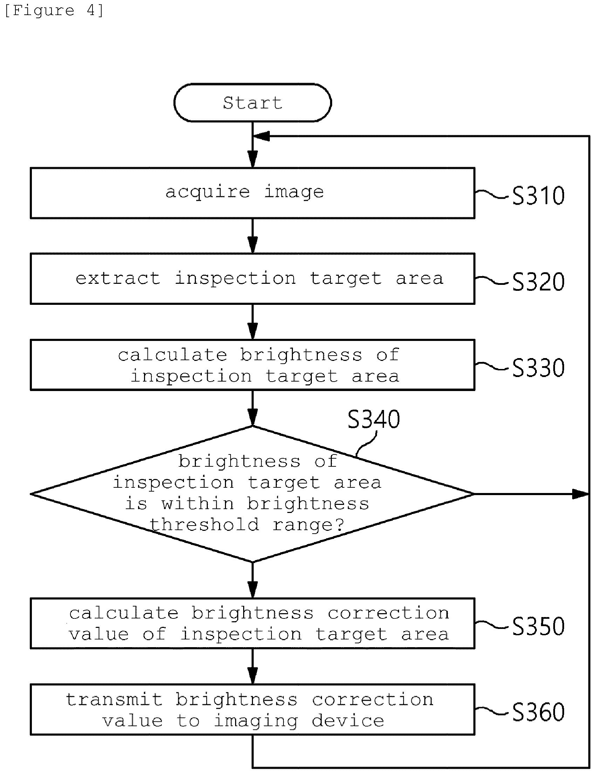

FIG. 4 is a schematic flowchart of an image brightness correction method according to embodiments of the present invention.

The image brightness correction method according to embodiments of the present invention may be performed by an electrode inspection apparatus according to embodiments of the present invention. The electrode inspection apparatus may include or be linked to an imaging device (image capturing device), i.e., an optical system, and an image of an inspection target may be acquired by the imaging device.

Referring to FIG. 4, the electrode inspection apparatus may acquire a plurality of images of the appearance of an inspection target object captured at different brightnesses from an imaging device, i.e., a camera (S310). According to embodiments of the present invention, the inspection target object may be an electrode (positive electrode or negative electrode) in an electrode preparation process of a battery manufacturing process.

Here, the plurality of images captured at different brightnesses may include a first image captured at a first brightness and a second image captured at a second brightness. The reason for capturing the same target object at different brightnesses is that the brightness levels suitable for identification and analysis are different depending on the characteristics of the plurality of inspection target areas included in the target object. Therefore, a detection factor to be analyzed and detected through the first image and a detection factor to be analyzed and detected through the second image may be different.

For example, when the first image is a relatively bright image and the second image is a relatively dark image, a coated region and an uncoated region may be extracted as inspection target areas in the first image. In addition, an insulating region and an uncoated region may be extracted as inspection target areas in the second image.

The electrode inspection apparatus may extract one or more inspection target areas from the acquired image (S320). Here, the inspection target area (Region of Interest: ROI) represents an area where the actual inspection will be performed in the inspection image. According to embodiments of the present invention, the inspection target area may include one or more areas among a coated region, an uncoated region, and an insulating region of the electrode.

The electrode inspection apparatus may also calculate the brightness of each extracted inspection target area (S330). More specifically, the brightness of the coated region, the brightness of the uncoated region, and the brightness of the insulating region in the electrode may be calculated, respectively. Here, the brightness of each inspection area may be calculated as an average value by converting the image into gray scale and calculating the brightness values of all pixels included in the corresponding inspection area.

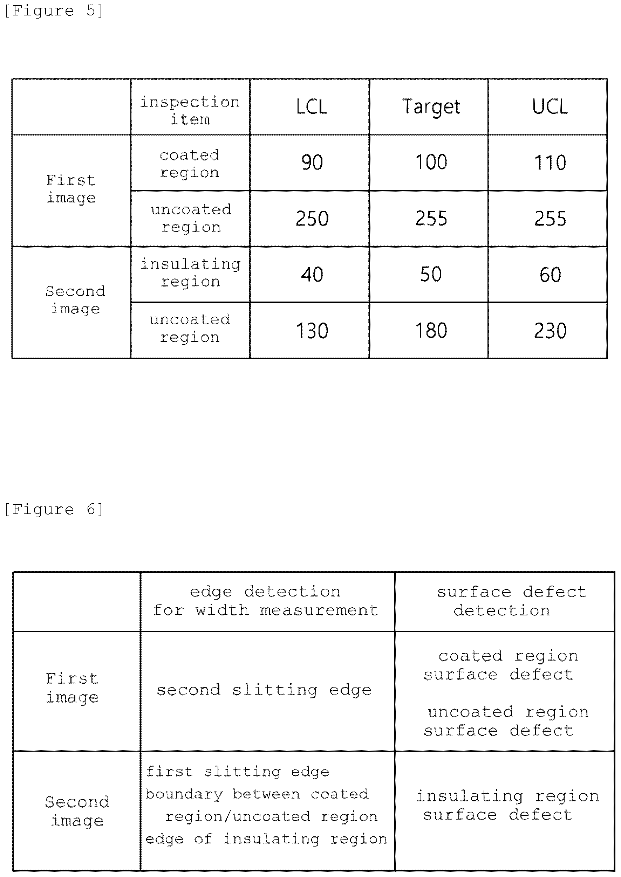

The electrode inspection apparatus may determine whether the calculated brightness of each inspection target areas is within the brightness threshold range set for each inspection target area (S340). The brightness threshold range determined for each inspection target area may be defined by an upper limit and a lower limit. The brightness threshold range will be described in detail with reference to FIGS. 5 and 6 below.

The electrode inspection apparatus may calculate a brightness correction value by reflecting a target brightness to the brightness of the inspection target area based on the comparison result with a brightness threshold (S350). In other words, if the average brightness of the inspection target area is outside the range from the lower brightness limit to the upper brightness limit, the electrode inspection apparatus may calculate a brightness correction value based on a difference value between the average brightness of the inspection target area and the target brightness.

The calculated brightness correction value may be transmitted to the imaging device (S360) and may be used for the next imaging of the inspection target object.

FIG. 5 is a table showing inspection items in each image according to embodiments of the present invention.

The first image according to embodiments of the present invention may be an image having a first brightness, and the second image may be an image having a second brightness. The second brightness has a different brightness from the first brightness and may have a lower brightness than the first brightness. In other words, the first image and the second image are images of the same object captured with different brightnesses.

In the table of FIG. 5, the first image may be a relatively bright image and the second image may be a relatively dark image.

In the first image according to embodiments of the present invention, the coated region and the uncoated region may be extracted as inspection target areas. In addition, the insulating region and the uncoated region may be extracted as the inspection target areas in the second image.

In each image, the brightness lower limit (LCL) and brightness upper limit (UCL) for the inspection target area may be defined. In other words, in the first image, the brightness lower limit (LCL) of the coated region is defined as 90 and the brightness upper limit (UCL) of the coated region is defined as 110 whereas the brightness lower limit (LCL) of the uncoated region is defined as 250 and the brightness upper limit (UCL) of the uncoated region is defined as 255. In the first image, the target brightness of the coated part is set to 100, and the target brightness of the uncoated region is set to 255.

Meanwhile, in the second image, the brightness lower limit (LCL) of the insulating region is defined as 40 and the brightness upper limit (UCL) of the insulating region is defined as 60 whereas the brightness lower limit (LCL) of the uncoated region is defined as 130 and the brightness upper limit (UCL) of the uncoated region is defined as 230. In the second image, the target brightness of the insulating region is set to 50, and the target brightness of the uncoated region is set to 180.

For the same uncoated region, the upper brightness limit (UCL), lower brightness limit (LCL), and target brightness are set differently in the first image and the second image because the overall brightness of the first image and the overall brightness of the second image are set differently.

FIG. 6 is a table presenting items to be detected through each image inspection according to embodiments of the present invention.

Referring to FIG. 6, the items to be detected through the first image in embodiments of the present invention may include a second slitting edge for measuring a second slitting width and surface defects of a coated region and an uncoated region. In addition, the items to be detected through the second image may include a first slitting edge for measuring a first slitting width, a boundary between the coated region and the uncoated region, an edge of an insulating region, and surface defect of the insulating region.

Here, the slitting process of the electrode may be configured to include a first slitting and a second slitting. Meanwhile, the first slitting process may be understood as a process of cutting a jumbo roll into a plurality of unit electrode sheets (for example, four unit electrode sheets), and the second slitting process may be understood as a process of further cutting one unit electrode sheet to form a plurality of sub-unit electrode sheets.

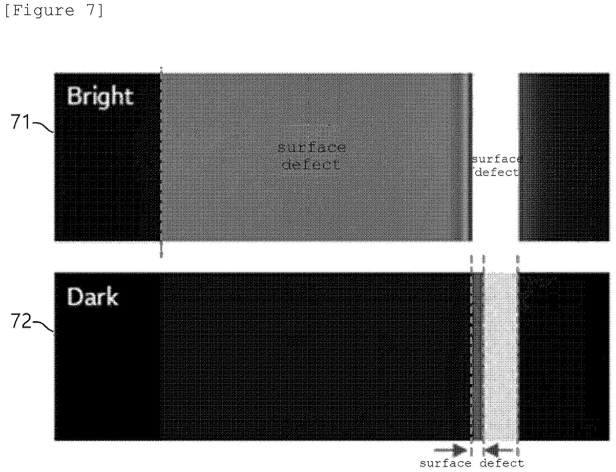

FIG. 7 shows detection items in each image inspection which are displayed on an actual image according to embodiments of the present invention.

In FIG. 7, the first image 71 and the second image 72 are images acquired by photographing the same target object at different brightnesses. The first image 71 is a brighter image than the second image 72, and is suitable for detecting surface defects of the coated region and surface defects of the uncoated region. Meanwhile, the second image 72 is a darker image than the first image, and is suitable for detecting the boundary between the coated region and the uncoated region, the edge of the insulating region, and surface defects of the insulating region.

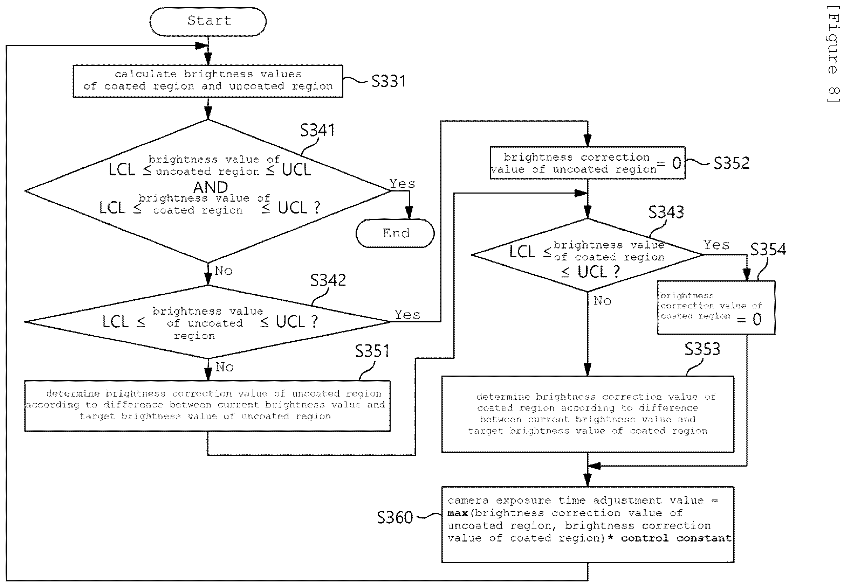

FIG. 8 shows an example of a brightness correction method for an image having relatively low brightness according to embodiments of the present invention.

The brightness correction method of FIG. 8 shows an operational sequence of the brightness correction method applied to a relatively bright image among multiple images acquired at different brightnesses for the same target object, and may be understood as a flow chart showing some steps of the entire method of FIG. 4 in more detail for a specific image. In other words, some steps of the method illustrated in FIG. 8 may overlap with some steps of the brightness correction method illustrated in FIG. 4.

The image brightness correction method according to embodiments of the present invention may be performed by the electrode inspection apparatus according to embodiments of the present invention. The electrode inspection apparatus may include an imaging device, for example, an optical system, or may be connected to the optical system, and images of the inspection target may be acquired by the imaging device.

As mentioned above, the inspection target areas for relatively bright images are the coated region and the uncoated region according to embodiments of the present invention.

In other words, the electrode inspection apparatus may extract a coated region and an uncoated region, which are the inspection target areas, from the acquired image, and calculate a brightness value of each area (S331). The calculated brightness value of the uncoated region may be compared with the brightness upper limit (UCL) and the brightness lower limit (LCL) of the uncoated region, and the calculated brightness value of the coated region may be compared with the brightness upper limit (UCL) and the brightness lower limit (LCL) of the coated region (S341). If the brightness value of each area is within the defined standard range (determined appropriate range) (Yes in S341), the brightness value control procedure is not necessary, so the procedure may be terminated.

On the other hand, if either the brightness value of the uncoated region or the brightness value of the coated region is out of the standard range, it is determined whether the brightness value of the uncoated region is out of the standard range (S342) or whether the brightness value of the coated region is out of the standard range (S343).

If the brightness value of the uncoated region is not within the standard range (No in S342), the brightness correction value of the uncoated region may be determined according to a difference between the current brightness value of the uncoated region and the target brightness value of the uncoated region (S351). More specifically, (target brightness value of the uncoated region - current brightness value of the uncoated region) may be determined as the brightness correction value of the uncoated region. Here, if the current brightness value of the uncoated region exceeds the upper limit value of the uncoated region, the brightness correction value becomes a negative value. On the other hand, if the current brightness value of the uncoated region is less than the lower limit value of the uncoated region, the brightness correction value becomes a positive value. Meanwhile, if the brightness value of the uncoated region is within the standard range (Yes in S342), the brightness correction value of the uncoated region is set to "0" (S352).

Afterwards, if the brightness value of the coated region is not within the standard range (No in S343), the brightness correction value of the coated region may be set according to the difference between the current brightness value of the coated region and the target brightness value of the coated region (S353). More specifically, (target brightness value of the coated region - current brightness value of the coated region) is set as the brightness correction value. If the current brightness value of the coated region exceeds the upper limit value of the coated region, the brightness correction value becomes a negative value, and conversely, if the current brightness value of the coated region is less than the lower limit value of the coated region, the brightness correction value becomes a positive value. On the other hand, if the brightness value of the coated region is within the standard range (Yes in S343), the brightness correction value of the coated region is set to "0" (S354).

Then, a camera exposure time adjustment value may be calculated according to the brightness correction value of the uncoated region and the brightness correction value of the coated region (S360). More specifically, the camera exposure time adjustment value may be calculated by multiplying the larger value of the brightness correction value of the uncoated region and the brightness correction value of the coated region by a control constant. Here, the control constant may be a constant for compensating for the difference in the expression unit between the brightness correction value and the exposure time adjustment value. Meanwhile, if the correction value is a negative value, the value having the larger absolute value is selected and multiplied by the control constant, and the selected camera exposure time adjustment value is calculated.

The calculated camera exposure time adjustment value may be provided to a camera, and the camera may adjust the brightness of the image to be captured by applying the exposure time adjustment value to the next capture of the target object. Here, the total amount of light received by a camera sensor may be expressed as the product of the exposure time and the area receiving light. Therefore, if the camera exposure time is increased, the brightness of the image may also be increased.

Meanwhile, steps S331 to S360 of the image brightness correction method of the above-described FIG. 8 may be repeatedly performed until the image brightness of each target area satisfies an appropriate range, i.e., a defined standard range.

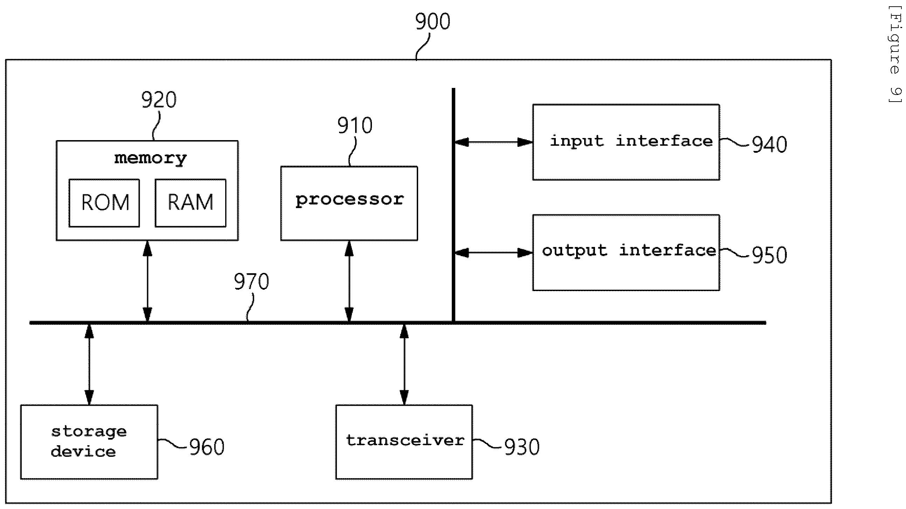

FIG. 9 is a block diagram of an electrode inspection apparatus according to embodiments of the present invention.

An electrode inspection apparatus 900 according to embodiments of the present invention may be a device for inspecting an electrode under an electrode preparation process of a battery manufacturing process, and may include at least one processor 910, a memory 920 configured to store at least one instruction executed by the processor, and a transceiver 930 connected to a network and performing communication.

An electrode inspection apparatus according to embodiments of the present invention may be connected to an imaging device configured to capture external appearance of a target object or may include such an imaging device.

Here, the at least one instruction may include an instruction to receive a plurality of images of the appearance of a target object captured at different brightness levels from an imaging device; an instruction to extract one or more inspection target areas within each image; an instruction to compare brightnesses of the one or more inspection target areas with a brightness threshold which is determined for each inspection target area; and an instruction to calculate a brightness correction value by reflecting a target brightness to the brightness of each inspection target area based on the comparison result.

The brightness of each inspection target area may be determined to an average brightness of pixels within the inspection target area.

The instruction to compare brightnesses of the one or more inspection target areas with a brightness threshold which is determined for each inspection target area may include an instruction to compare the average brightness of the inspection target area with a brightness lower limit value and a brightness upper limit value determined for the corresponding inspection target area.

The instruction to calculate a brightness correction value by reflecting a target brightness to the brightness of each inspection target area based on the comparison result may include an instruction to calculate the brightness correction value based on a difference value between the average brightness and the target brightness when the average brightness of the inspection target area is outside a range from the brightness lower limit value to the brightness upper limit value.

The instruction to calculate the brightness correction value based on a difference value between the average brightness and the target brightness may include an instruction to calculate a camera exposure time adjustment value calculated by multiplying the difference between the average brightness and the target brightness by a control constant.

The instruction to calculate the brightness correction value based on a difference value between the average brightness and the target brightness may include an instruction to, if one image includes a plurality of inspection target areas and brightness correction values calculated for the plurality of inspection target areas are different from each other, calculate a camera exposure time adjustment value by multiplying the largest value among the brightness correction values by a control constant.

The at least one instruction may further include an instruction to provide the calculated camera exposure time adjustment value to the imaging device.

The one or more inspection target areas may include one or more of a coated region, an uncoated region, and an insulating area of an electrode that are distinguished according to the properties of the corresponding area.

The plurality of images captured with different brightnesses may include a first image captured with a first brightness and a second image captured with a second brightness, and the second brightness is different from the first brightness.

Meanwhile, the at least one instruction may further include an instruction to perform defect inspection of the target object during a battery manufacturing process using the inspection target area of which the brightness is corrected.

The electrode inspection apparatus 900 may further include an input interface device 940, an output interface device 950, a storage device 960, etc. Respective components included in the electrode inspection apparatus 900 may be connected by a bus 970 and communicate with each other.

The storage device 960 may store a plurality of images captured by the imaging device and at least one image produced in each step of the inspection method according to embodiments of the present invention. The images stored in the storage device 960 may be provided to the at least one processor 910 when necessary, during execution of the method according to embodiments of the present invention.

Here, the processor (910) may mean a central processing unit (CPU), a graphics processing unit (GPU), or a dedicated processor on which methods according to embodiments of the present invention are performed. The memory (or storage device) may be configured as at least one of a volatile storage medium and a nonvolatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A method for correcting image brightness comprising:
acquiring a plurality of images of appearance of a target object captured at different brightness levels, respectively;
extracting one or more inspection target areas within each image;
comparing brightnesses of the one or more inspection target areas with a brightness threshold which is predetermined for each inspection target area; and
calculating a brightness correction value by comparing a target brightness to the brightness of each inspection target area based on a comparison result.

2. The method of claim 1, wherein the brightness of each inspection target area is an average brightness of pixels within the inspection target area.

3. The method of claim 2, wherein the comparing of the brightnesses of the one or more inspection target areas with the brightness threshold includes:
comparing the average brightness of the inspection target area with a brightness lower limit value and a brightness upper limit value for the corresponding inspection target area.

4. The method of claim 3, wherein the calculating of the brightness correction value by comparing the target brightness to the brightness of each inspection target area includes:
calculating the brightness correction value based on a difference value between the average brightness and the target brightness when the average brightness of the inspection target area is outside a range from the brightness lower limit value to the brightness upper limit value.

5. The method of claim 4, wherein the calculating of the brightness correction value based on the difference value between the average brightness and the target brightness includes:
calculating a camera exposure time adjustment value by multiplying the difference value by a control constant.

6. The method of claim 4, wherein the calculating of the brightness correction value based on the difference value between the average brightness and the target brightness includes:
if one image includes a plurality of inspection target areas and brightness correction values calculated for the plurality of inspection target areas are different from each other,
calculating a camera exposure time adjustment value by multiplying a largest value of the brightness correction values by a control constant.

7. The method of claim 6, further including providing the camera exposure time adjustment value to an imaging device.

8. The method of claim 1, wherein the target object includes an electrode in an electrode preparation process of a battery manufacturing process.

9. The method of claim 1, wherein the one or more inspection target areas include one or more of a coated region, an uncoated region, or an insulating area of an electrode.

10. The method of claim 1, wherein the plurality of images includes a first image captured with a first brightness and a second image captured with a second brightness,
wherein the second brightness is different from the first brightness.

11. The method of claim 1, further comprising performing a defect inspection of the target object in a battery manufacturing process using the one or more inspection target areas.

12. An apparatus for inspecting an electrode during an electrode preparation process of a battery manufacturing process, the apparatus comprising:
at least one processor; and
a memory configured to store at least one instruction executed by the at least one processor,
wherein the at least one instruction includes:
an instruction to receive a plurality of images of the appearance of a target object captured at different brightness levels from an imaging device, respectively;
an instruction to extract one or more inspection target areas within each image;
an instruction to compare brightnesses of the one or more inspection target areas with a brightness threshold which is predetermined for each inspection target area; and
an instruction to calculate a brightness correction value by comparing a target brightness to the brightness of each inspection target area based on a comparison result.

13. The apparatus of claim 12, wherein the brightness of each inspection target area is an average brightness of pixels within the inspection target area.

14. The apparatus of claim 13, wherein the instruction to compare the brightnesses of the one or more inspection target areas with a brightness threshold includes:
an instruction to compare the average brightness of the inspection target area with a brightness lower limit value and a brightness upper limit value for the corresponding inspection target area.

15. The apparatus of claim 14, wherein the instruction to calculate the brightness correction value by comparing the target brightness to the brightness of each inspection target area based on the comparison result includes:
an instruction to calculate the brightness correction value based on a difference value between the average brightness and the target brightness when the average brightness of the inspection target area is outside a range from the brightness lower limit value to the brightness upper limit value.

16. The apparatus of claim 15, wherein the instruction to calculate the brightness correction value based on a difference value between the average brightness and the target brightness includes:
an instruction to calculate a camera exposure time adjustment value by multiplying the difference value by a control constant.

17. The apparatus of claim 15, wherein the instruction to calculate the brightness correction value based on a difference value between the average brightness and the target brightness includes:
an instruction to, if one image includes a plurality of inspection target areas and brightness correction values calculated for the plurality of inspection target areas are different from each other, calculate a camera exposure time adjustment value by multiplying a largest value of the brightness correction values by a control constant.

18. The apparatus of claim 17, wherein the at least one instruction further includes:
an instruction to provide the camera exposure time adjustment value to the imaging device.

19. The apparatus of claim 12, wherein the one or more inspection target areas include one or more of a coated region, an uncoated region, or an insulating area of an electrode.

20. The apparatus of claim 12, wherein the plurality of images includes a first image captured with a first brightness and a second image captured with a second brightness, and
wherein the second brightness is different from the first brightness.

21. The apparatus of claim 12, wherein the at least one instruction further includes:
an instruction to perform a defect inspection of the target object during a battery manufacturing process using the one or more inspection target areas.
